# EUROPEAN PATENT SPECIFICATION

(11) **EP 0 915 796 B1**
(45) Date of publication and mention of the grant of the patent: **09.07.2003**
(21) Application number: 98924699.6
(22) Date of filing: 18.05.1998
(51) Int. Cl.: B62D 33/10

(54) **CAB SUSPENSION**
AUFHÄNGVORRICHTUNG FUR FAHRERHAUS
SUSPENSION A RESSORTS D'UNE CABINE

(30) Priority: 26.05.1997 SE 9701946
(43) Date of publication of application: 19.05.1999
(73) Proprietor: SCANIA CV AKTIEBOLAG, S-151 87 Södertälje (SE)
(72) Inventor: BERGSTRÖM, Ake, S-647 31 Mariefred (SE); JÄRNSTRÖM, Sune, S-151 46 Södertälje (SE)
(86) International application number: SE9800920
(87) International publication number: WO98054044

(56) References cited:
- US-A- 4 807 713

## Description

The present invention relates to a device for cabs for vehicles of the kind indicated in the preamble to patent claim 1. Such a suspension system is generally known in the prior art.

### State of the art.

A known practice is to arrange gas springs between the cab and frame of road freight vehicles. These springs allow the cab to move between upper and lower limit stops.

US-A-4 807 713 discloses a device for cabs for vehicles, whereby the driving cab is springingly supported by a number of gas springs relative to the vehicle chassis, which gas springs are connected to a gas pressure reservoir via at least one feed line, which device includes upper and lower limit-position stops which limit the driving cab's springing movements upwards and downwards relative to the chassis, wherein at least one adjusting valve is arranged along the feed line, which adjusting valve in a second position has at least one of two functions, the first of which functions consists in the adjusting valve closing the connections and in a venting line being connected to the gas springs, via which venting line the gas pressure in the gas springs is reduced so that the driving cab is caused to abut against the lower limit-position stops. Gas springs serve to increase comfort while the vehicle is in motion but may give rise to problems while it is parked. Passing traffic may in particular result in air currents which may cause the cab of the parked vehicle to rock. The larger the vehicle which is passing, the more the cab will rock. As the sleeping accommodation in a modern driving cab is often situated relatively high in the cab, cab movements may be perceived as disturbing the comfort of a person lying in the sleeping accommodation. It is also the case that when the vehicle is lined up for loading, the cab may be subjected to severe oscillations when heavy loads are applied. These oscillations may be so great that the cab impinges powerfully against the limit stops.

The object of the present invention is therefore to provide a solution, which will eliminate the above-mentioned disadvantages. This is achieved by means of the characteristics of the invention, which are indicated in the patent claims below.

Using the invention makes it possible to lower or raise the cab from a resilient operating position of the vehicle to a position in which the cab abuts against the upper or lower limit stop. When the cab abuts against either limit stop, it has no possibility of springing relative to the vehicle frame, thereby eliminating the aforesaid problems.

The invention will now be described below in two preferred embodiments with reference to the attached drawings.
Figure 1 shows a driving cab balanced on forward and rear gas springs.
Figure 2 shows the driving cab lowered against a lower limit-position stop.
Figure 3 shows the driving cab raised to abut against an upper limit-position stop.

### Description of the invention.

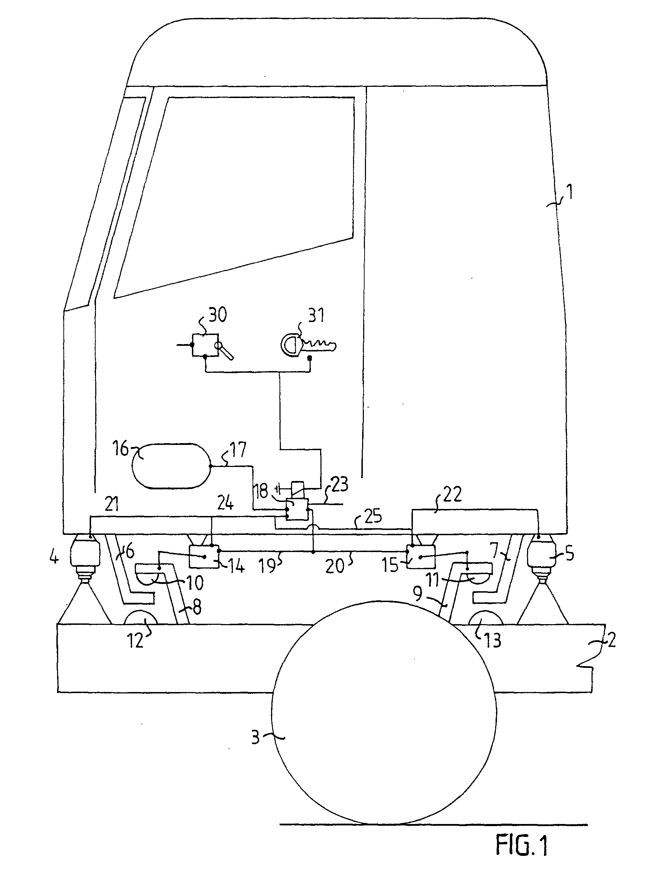

Figures 1 to 3 show schematic side views of a driving cab 1 for a road freight vehicle together with the structure which supports the driving cab on a chassis or frame 2 of the road freight vehicle. The forward pair of wheels is designated by reference 3. The driving cab 1 is kept balanced by means of a number of gas springs, comprising in this embodiment two forward gas springs 4 and two rear gas springs 5. Both the rear and the forward gas springs are arranged approximately at the respective corners of the cab 1. The gas springs 4 and 5 are thus arranged between the floor of the cab 1 and the frame 2. There is usually a stabiliser (not depicted) arranged between the cab and the frame, thereby making it possible for the number of gas springs to be reduced to three or two. Forward and rear support brackets 6 and 7 are installed in the cab floor close to the gas springs. Forward and rear bearers 8 and 9 are arranged on the frame 2 centrally opposite the support brackets. These bearers have upper limit-position stops in the form of stop pads 10 and 11. Lower limit-position stops in the form of stop cushions 12 and 13 are arranged on the frame centrally below the support brackets 6 and 7. As may be seen in the drawings, the support brackets 6 and 7 are thus able to move between the respective stop pads 10,11 and stop cushions 12,13. The stop pads 10,11 and the stop cushions 12,13 thus limit the driving cab's springing movements upwards and downwards relative to the chassis. While the vehicle is in motion, the pressure in the gas springs 4 and 5 is maintained so that the support brackets 6 and 7 are always kept in a position of equilibrium approximately centrally between the stop pads and the stop cushions. This is effected by a number of level controllers 14,15, which adjust the gas supply to the gas springs 4,5. Each level controller consists of a valve housing fastened to the cab. An air duct (not depicted) extends through the valve housing. A valve element is arranged in the air duct. The valve element is adjustable between two limit positions. At one limit position the air duct is fully open and at the other limit position it is closed. Between the limit positions the air duct is more or less open. The valve element is connected to one end of an arm 26 which has its other end connected to the frame. When the cab springs relative to the frame, the arm swings up or down and influences the movement of the valve element between the two limit positions and thus controls the air supply to the air springs, since the air duct is more or less constricted depending on the position of the arm 26. In this embodiment two forward level controllers 14 and two rear level controllers 15 are used.

The device includes a gas pressure reservoir 16, which by means of a compressor (not depicted) is supplied with air at a pressure of, for example, 0.8 MPa (8 kilopond per cm²). This pressure is fed to the respective gas springs via a line 17 (feed line), an adjusting valve 18 hereinafter called the solenoid valve 18, two branch lines 19 and 20 (feed lines), the level controllers 14 and 15 and connecting lines 21 and 22 (feed lines). During normal motion of the vehicle, the gas springs are supplied with an air pressure of about 0.5 MPa (5 kilopond per cm²) by means of a reducing valve (not depicted). If the vehicle encounters a strong headwind, the cab will tend to lean backward relative to the vehicle frame 2. In such cases the rear level controllers 15 ensure that more compressed air is supplied to the rear gas springs 5 and the cab is kept upright.

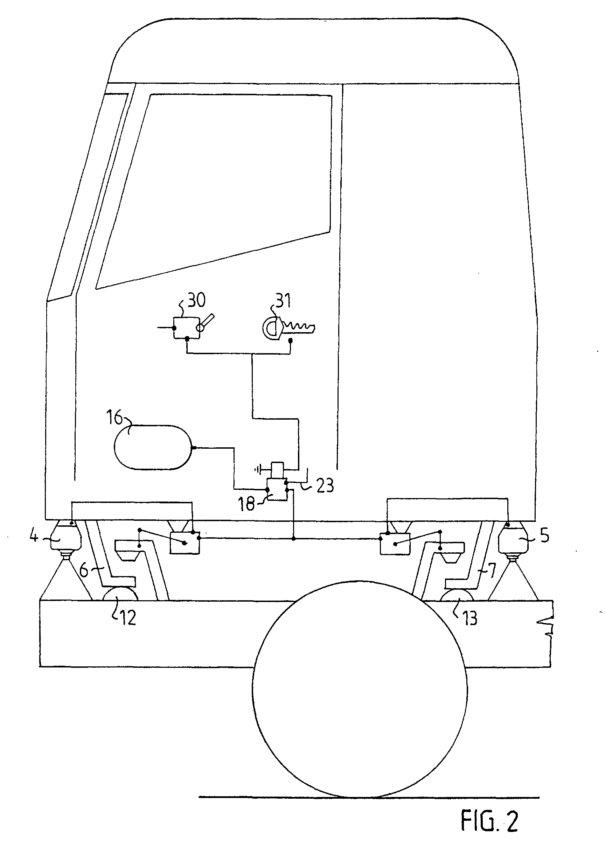

Now it may be found desirable that the cab should rest not on the gas springs but on their lower stop cushions 12 and 13. This is achieved by the solenoid valve 18 being set in a closing position so that the branch lines 19 and 20 receive no air pressure while at the same time these lines are vented, e.g. via a venting line 23 on the solenoid valve. The design of the solenoid valve 18 will not be described in further detail but its function will be indicated. The solenoid valve may be operated electrically, e.g. by means of the starting key 31 or a circuit breaker 30. Both of the alternatives 30,31 are depicted in parallel in the drawings but in practice only one of the alternatives is preferably used. Thus if no compressed air is supplied to the branch lines 19 and 20 and the lines are at the same time vented, the weight of the cab will cause the support brackets 6 and 7 (four brackets) to sink down against the stop cushions 12,13 on the vehicle frame 2 and the cab will rest firmly on the frame (see Figure 2).

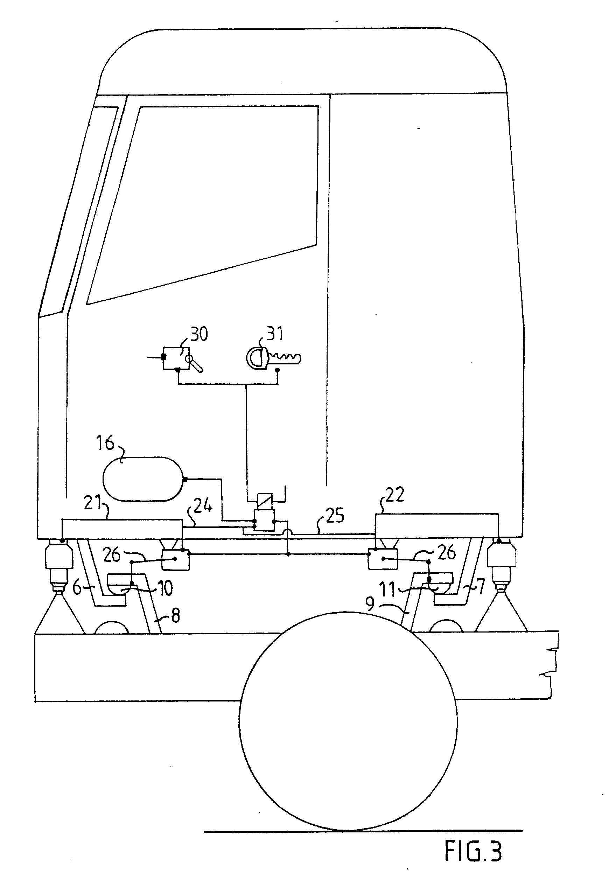

As mentioned in the introduction, it may also be found desirable or necessary for the vehicle cab to be raised relative to the frame 2 so that the support brackets 6 and 7 abut against the stop pads 10 and 11 on the undersides of the bearers 8 and 9. In such a position, increased pressure has to be supplied to the gas springs 4 and 5, i.e. all four gas springs. This may be effected by eliminating the action of the level controllers 14,15. According to Figure 3, this is effected by the solenoid valve 18 having a further control position whereby two bypass lines 24 and 25 between the solenoid valve and the respective forward connecting lines 21 and rear connecting lines 22 receive increased pressure directly without the air passing through the level controllers. An increased pressure will thus be supplied to all four gas springs directly from the solenoid valve and this pressure may be that prevailing in the pressure reservoir 16. Consequently the support brackets 6 and 7 will be pressed upwards against the stop pads 10 and 11 and the cab will thus be pressed firmly upwards against these latter. If the vehicle is subjected to powerful lowering or rocking as a result of loading, the cab will follow the movement of the vehicle chassis 2 without the occurrence of movements impinging against the stop cushions or the stop pads.

As an alternative to the bypass lines 24 and 25, the level controllers 14 and 15 may have an (undepicted) disconnecting mechanism (electrically operated) which disconnects the connections (the arms 26) to the bearers 8,9 whereby compressed air always passes through the level controllers. When the level controllers have subsequently to be put back into operation, the first step is to release the gas pressure from the lines so that the vehicle cab sinks down, after which the function of the arms 26 can be reconnected. An adjusting valve has also been described but it may be seen that the device may include two or more valves which effect the function described.

The description above is of an embodiment in which an adjusting valve 18 is used. It is of course possible to use a system of valves in order to locate the cab against the lower stop cushions or against the upper stop pads.

## Claims

1. Device for cabs for vehicles, preferably heavy-duty road freight vehicles, whereby the driving cab is springingly supported by a number of gas springs (4,5) relative to the vehicle chassis (2), which gas springs (4,5) are connected to a gas pressure reservoir (16) via at least one feed line (17,19,20,21,22), which device includes upper and lower limit-position stops (10,11,12,13) which limit the driving cab's springing movements upwards and downwards relative to the chassis (2), the device further including a number of level controllers (14,15) by which the gas supply to the gas springs (4,5) is adjusted so that the driving cab is kept in a position of equilibrium between the upper and lower limit-position stops (10,11,12,13), **characterised in that** said device includes at least one adjusting valve (18) arranged along the feed line (17) which adjusting valve (18) in a first position is arranged to maintain connections (17,19,20,21,22) between the gas pressure reservoir (16) and the gas springs (4,5) via the level controllers (14,15), and which adjusting valve in a second position has at least one of two functions, the first of which functions consisting in the adjusting valve (18) being arranged to close the connections (17,19,20,21,22) and in a venting line (23) being connected to the gas springs (4,5), via which venting line (23) the gas pressure in the gas pressure springs (4,5) is reduced so that the driving cab is caused to firmly rest against the lower limit-position stops (12,13), and the second function consisting in the action of the level controllers (14,15) being disconnected and in the gas springs (4,5) being supplied with increased gas pressure whereby the driving cab is caused to be pressed firmly upwards against the upper limit-position stops (10,11).

2. Device according to claim 1, **characterised in that** the driving cab during the first function is caused to firmly rest against the lower limit-position stops (12,13) by its own weight.

3. Device according to claim 1, **characterised in that** said adjusting valve (18) is suitable to be operated electrically by means of circuit breaker or an ignition key of the vehicle.

4. Device according to claim 1, **characterised in that** in the first position of the adjusting valve (18) the level controllers (14,15) can be set to maintain constant connections (19,21 and 20,22 respectively) between the adjusting valve (18) and the gas springs (4,5) so that the cab is firmly pressed against the upper stops (10,11) according to the second function of the adjusting valve (18).

5. Device according to claim 4, **characterised in that** the level controllers (14,15) are connected to an electrically operated disconnecting mechanism comprised in said device which, when activated, is arranged to create a connection between the adjusting valve (18) and the gas springs (4,5), via which connection the gas springs are constantly supplied with gas pressure.

6. Device according to claim 1, **characterised in that** a bypass line (24,25) is arranged in said device from the adjusting valve (18) to each gas spring and being arranged to bypass the respective level controller (14,15) so that the gas springs are constantly supplied with gas pressure whereby the cab (1) will be firmly pressed against the upper stops (10,11) according to the second function of the valve system.

## Patentansprüche

1. Vorrichtung für Fahrerhäuser für Fahrzeuge, vorzugsweise Schwerlastfahrzeuge, wodurch das Fahrerhaus in bezug auf das Fahrgestell (2) des Fahrzeugs von mehreren Gasfedern (4, 5) federnd getragen wird, die über zumindest eine Zufuhrleitung (17, 19, 20, 21, 22) mit einem Gasdruckreservoir (16) verbunden sind, wobei die Vorrichtung obere und untere Endanschläge (10, 11, 12, 13) einschließt, die die federnden Bewegungen des Fahrerhauses aufwärts und abwärts in bezug auf das Fahrgestell (2) begrenzen, und die Vorrichtung ferner mehrere Niveausteuereinheiten (14, 15) einschließt, durch die die Gaszufuhr zu den Gasfedern (4, 5) so eingestellt wird, dass das Fahrerhaus in einer Gleichgewichtslage zwischen den oberen und unteren Endanschlägen (10, 11, 12, 13) gehalten wird, **dadurch gekennzeichnet, dass** die Vorrichtung zumindest ein entlang der Zufuhrleitung (17) angeordnetes Einstellventil (18) enthält, das in einer ersten Stellung dafür eingerichtet ist, Verbindungen (17, 19, 20, 21, 22) zwischen dem Gasdruckreservoir (16) und den Gasfedern (4, 5) über die Niveausteuereinheiten (14, 15) aufrechtzuerhalten, und in einer zweiten Stellung zumindest eine von zwei Funktionen hat, von denen die erste darin besteht, dass das Einstellventil (18) dafür eingerichtet ist, die Verbindungen (17, 19, 20 ,21, 22) zu schließen, und eine Entlüftungsleitung (23) mit den Gasfedern (4, 5) verbunden wird, über welche Entlüftungsleitung (23) der Gasdruck in den Gasdruckfedern (4, 5) reduziert wird, so dass bewirkt wird, dass das Fahrerhaus an den unteren Endanschlägen (12, 13) fest aufsitzt, und die zweite Funktion darin besteht, dass die Tätigkeit der Niveausteuereinheiten (14, 15) unterbrochen wird und die Gasfedern (4, 5) mit erhöhtem Gasdruck versorgt werden, wodurch bewirkt wird, dass das Fahrerhaus fest aufwärts gegen die oberen Endanschläge (10, 11) gedrückt wird.

2. Vorrichtung nach Anspruch 1, **dadurch gekennzeichnet, dass** man das Fahrerhaus während der ersten Funktion durch sein Eigengewicht an den unteren Endanschlägen fest aufsitzen lässt.

3. Vorrichtung nach Anspruch 1, **dadurch gekennzeichnet, dass** das Einstellventil (18) dafür geeignet ist, mittels eines Unterbrechers oder Zündschlüssels des Fahrzeugs elektrisch betrieben zu werden.

4. Vorrichtung nach Anspruch 1, **dadurch gekennzeichnet, dass** in der ersten Stellung des Einstellventils (18) die Niveausteuereinheiten (14, 15) eingestellt werden können, um konstante Verbindungen (19, 21 bzw. 20, 22) zwischen dem Einstellventil (18) und den Gasfedern (4, 5) aufrechtzuerhalten, so dass gemäß der zweiten Funktion des Einstellventils (18) das Fahrerhaus fest gegen die oberen Anschläge (10, 11) gedrückt wird.

5. Vorrichtung nach Anspruch 4, **dadurch gekennzeichnet, dass** die Niveausteuereinheiten (14, 15) mit einem elektrisch betriebenen, in der Vorrichtung enthaltenen Trennmechanismus verbunden sind, der, wenn er aktiviert ist, dafür eingerichtet ist, eine Verbindung zwischen dem Einstellventil (18) und den Gasfedern (4, 5) herzustellen, über welche Verbindung die Gasfedern konstant mit Gasdruck versorgt werden.

6. Vorrichtung nach Anspruch 1, **dadurch gekennzeichnet, dass** eine Umgehungsleitung (24, 25) in der Vorrichtung vom Einstellventil (18) zu jeder Gasfeder angeordnet und dafür eingerichtet ist, die jeweilige Niveausteuereinheit (14, 15) zu umgehen, so dass die Gasfedern konstant mit Gasdruck versorgt werden, wodurch gemäß der zweiten Funktion des Ventilsystems das Fahrerhaus (1) fest gegen die oberen Anschläge (10, 11) gedrückt wird.

## Revendications

1. Dispositif pour des cabines de véhicules, de préférence des véhicules de transport routier de type poids-lourd, où la cabine de conduite est supportée de manière élastique par plusieurs ressorts à gaz (4, 5) par rapport au châssis de véhicule (2), lesquels ressorts à gaz (4, 5) sont reliés à un réservoir de pression de gaz (16) par l'intermédiaire d'au moins une conduite d'alimentation (17, 19, 20, 21, 22), lequel dispositif comprend des butées de position de limite supérieures et inférieures (10, 11, 12, 13) qui limitent les mouvements de ressort de cabine de conduite vers le haut et vers le bas par rapport au châssis (2), le dispositif comprenant en outre plusieurs dispositifs de commande de niveau (14, 15) grâce auxquels l'alimentation en gaz vers les ressorts à gaz (4, 5) est ajustée de telle sorte que la cabine de conduite est maintenue dans une position d'équilibre entre les butées de position de limite supérieures et inférieures (10, 11, 12, 13), **caractérisé en ce que** ledit dispositif comprend au moins une soupape de réglage (18) disposée le long de la conduite d'alimentation (17), laquelle soupape de réglage (18) dans une première position est prévue pour maintenir des liaisons (17, 19, 20, 21, 22) entre le réservoir de pression de gaz (16) et les ressorts à gaz (4, 5) par l'intermédiaire des dispositifs de commande de niveau (14, 15), et laquelle soupape de réglage dans une deuxième position a au moins une fonction parmi deux, la première de ces fonctions consistant **en ce que** la soupape de réglage (18) est prévue pour fermer les liaisons (17, 19, 20, 21, 22) et dans une conduits de miss à l'air libre (23) qui est reliée aux ressorts à gaz (4, 5), la pression de gaz dans les ressorts à gaz (4, 5) étant réduite par l'intermédiaire de cette conduite de mise à l'air libre (23) de telle sorte que la cabine de conduite est amenée à reposer fermement contre les butées de position de limite inférieures (12, 13), et la deuxième fonction consistant **en ce que** l'action des dispositifs de commande de niveau (14, 15) est déconnectée et **en ce que** les ressorts à gaz (4, 5) sont alimentés avec une pression de gaz accrue de sorte que la cabine de conduite est amenée à être appuyée fermement vers le haut contre les butées de position de limite supérieures (10, 11).

2. Dispositif selon la revendication 1, **caractérisé en ce que** la cabine de conduite pendant la première fonction est amenée à reposer fermement contre les butées de position de limite inférieures (12, 13) par son propre poids.

3. Dispositif selon la revendication 1, **caractérisé en ce que** ladite soupape de réglage (18) peut être actionnée de manière électrique au moyen d'un interrupteur ou d'une clé de contact du véhicule.

4. Dispositif selon la revendication 1, **caractérisé en ce que**, dans la première position de la soupape de réglage (18), les dispositifs de commande de niveau (14, 15) peuvent étre amenés à maintenir constantes des liaisons (19, 21 et 20, 22 respectivement) entre la soupape de réglage (18) et les ressorts à gaz (4, 5) de telle sorte que la cabine est appuyée fermement contre les butées supérieures (10, 11) suivant la deuxième fonction de la soupape de réglage (18).

5. Dispositif selon la revendication 1, **caractérisé en ce que** les dispositifs de commande de niveau (14, 15) sort reliés à un mécanisme de déconnexion actionné électriquement compris dans ledit dispositif qui, lorsqu'il est activé, est prévu pour créer une liaison entre la soupape de réglage (18) et les ressorts à gaz (4, 5), les ressorts à gaz étant alimentés en permanence avec une pression de gaz par l'intermédiaire de cette liaison.

6. Dispositif selon la revendication 1, **caractérisé en ce qu'**une conduite de dérivation (24, 25) est disposée dans ledit dispositif depuis la soupape de réglage (18) jusqu'à chaque ressort à gaz et est prévue pour contourner le dispositif de commande de niveau (14, 15) respectif de telle sorte que les ressorts à gaz sont alimentés en permanence avec une pression de gaz, de sorte que la cabine (1) est appuyée fermement contre les butées supérieures (10, 11) suivant la deuxième fonction du système de soupape.
